# EUROPÄISCHE PATENTSCHRIFT

(11) **EP 0 822 542 B1**
(45) Veröffentlichungstag und Bekanntmachung des Hinweises auf die Patenterteilung: **06.07.2005**
(21) Anmeldenummer: 97112392.2
(22) Anmeldetag: 18.07.1997
(51) Int. Cl.: G11B 7/09

(54) **Gerät zum Lesen und/oder Beschreiben optischer Aufzeichnungsträger**
Apparatus to read and/or write an optical record carrier
Appareil à lecture et/ou l'enregistrement d'un support d'enregistrement optique

(30) Priorität: 31.07.1996 DE 19630887
(43) Veröffentlichungstag der Anmeldung: 04.02.1998
(73) Patentinhaber: DEUTSCHE THOMSON-BRANDT GMBH, 78048 Villingen-Schwenningen (DE)
(72) Erfinder: Büchler, Christian, 78052 Villingen-Schwenningen (DE); Dang, Lieu Kim, 78056 Villingen-Schwenningen (DE)
(74) Vertreter: Kurth, Dieter, Dipl.-Ing.

(56) Entgegenhaltungen:
- EP-A- 0 238 162
- US-A- 4 858 216
- US-A- 5 258 968

## Beschreibung

Die vorliegende Erfindung befaßt sich mit einem Gerät zum Lesen und/oder Beschreiben optischer Aufzeichnungsträger.

Ein derartiges Gerät ist aus der US 4 497 048 bekannt. Der optische Aufzeichnungsträger, der von diesem Gerät gelesen wird, weist eine Informationsschicht auf, in die Vertiefungen in Form konzentrischer Kreise oder spiralförmig angeordneter Spuren aufgezeichnet sind. Diese Informationsschicht ist reflektierend, die Vertiefungen, die sogenannten Pits, werden mittels eines Lichtstrahls abgetastet. Das vom optischen Aufzeichnungsträger reflektierte Licht wird auf eine Photodetektoranordnung geleitet, wo sich ein Beugungsmuster ausbildet, welches von der Struktur des gerade abgetasteten Bereichs der Informationsschicht abhängt. Der Photodetektor ist in bezüglich der Spurrichtung seitlich angeordnete Bereiche eingeteilt, deren Signale zur Ermittlung eines Spurführungssignals genutzt werden. Dabei wird die relative Phasenlage dieser Signale verglichen. Die Zeitdifferenz der Signale, d.h. die relative Phasenverschiebung zueinander, ist proportional zur Abweichung des Lichtstrahls von der Spurmitte. Diese Zeitdifferenz wird daher als Spurfehlersignal zur Regelung der Spurführung verwendet. Diese Methode der Spurführung, die "Differential Phase Detection" (DPD) genannt wird, hat den Vorteil, daß sie weitgehend unabhängig von der vom optischen Aufzeichnungsträger reflektierten Lichtintensität arbeitet. Die reflektierte Lichtintensität kann je nach Reflektivität des optischen Aufzeichnungsträgers unterschiedlich sein, sowie hervorgerufen durch alterungsbedingte oder durch Umgebungseinflüsse bedingte unterschiedliche Eigenschaften der optischen Bauteile variieren.

Im allgemeinen sind in gattungsgemäßen Geräten zur Spurnachführung ein Grobantrieb und ein Feinantrieb vorhanden. Der Grobantrieb bewirkt, daß der gesamte Auslesekopf, auch "Pick-up" genannt, der im allgemeinen die Lichtquelle, die Optik und die Detektoranordnung umfaßt, in Radialrichtung bezüglich des optischen Aufzeichnungsträgers verschoben werden. Der Feinantrieb bewirkt ein Nachführen des Lichtstrahls um eine geringe Anzahl von Spurabständen durch Verschieben der Objektivlinse. Ein Nachteil des bekannten Geräts liegt darin, daß der Feinantrieb nur die Objektivlinse verschiebt, wodurch der Lichtstrahl aus der optischen Achse verschoben wird. Dies führt zu einer geringfügigen seitlichen Verschiebung des Beugungsmusters auf der Photodetektoranordnung. Dies bewirkt eine Verschiebung der Phasenlage der ausgewerteten Signale und wird somit als Spurabweichung interpretiert. D.h., obwohl der Lichtstrahl optimal auf der Spur liegt, wird durch den durch Linsenverschiebung hervorgerufenen Fehler die Spurführung so geregelt, daß immer eine geringfügige Abweichung des Strahls von der Mitte der Spur bewirkt wird. Diese Abweichung ist um so größer, je weiter die Objektivlinse aus der optischen Achse verschoben ist. Dieser Nachteil macht sich um so störender bemerkbar, je kleiner die Strukturen der Informationsschicht des optischen Aufzeichnungsträgers sind. Der mittels Feinantrieb zuverlässig nachregelbare Bereich wird dabei immer stärker eingeschränkt. Die Erzeugung eines Spurführungssignals wird also durch eine zunehmende Abweichung der Objektivlinse aus der optischen Achse immer stärker eingeschränkt.

In der US 4 858 216 die den einleitenden Teil des Anspruchs 1 wiederspiegelt, findet sich ein Ansatz, die Ruhelage der Objektivlinse einer solchen Anordnung zu regeln. Dort wird beschrieben, den Grobantrieb mit einem aus einem linken und einem rechten Summensignal eines Vierquadrantendetektors gewonnenen und tiefpassgefilterten Signal so zu steuern, dass als Regelziel die beiden Summensignale gleich groß werden. Als nachteilig an diesem Ansatz kann gesehen werden, dass kurzzeitige seitliche Auslenkungen der Objektivlinse von der optischen Achse des Pickups, wie sie z.B. durch exzentrische Geometrie oder Lage des Aufzeichnungsträgers auftreten, unvermindert den oben beschriebenen systematischen Regelfehler bewirken.

Aufgabe der vorliegenden Erfindung ist es daher, ein Gerät, welches nach der genannten Spurführungsmethode arbeitet, so weiterzuentwickeln, daß ein Spurführungssignal in einem größeren Bereich der Objektivlinsenverschiebung als nach dem Stand der Technik möglich problemlos mittels eines Feinantriebs nachregelbar ist.

Diese Aufgabe wird durch die im kennzeichnenden Teil des Anspruchs 1 angegebenen Maßnahmen gelöst. Erfindungsgemäß ist ein Erkennungsmittel zum Erkennen einer Verschiebung der Objektivlinse aus der optischen Achse heraus vorgesehen, welches ein Korrektursignal an das Spurführungsmittel abgibt. Dies hat den Vorteil, daß die Korrektur des Spurfehlersignals in direkter Abhängigkeit von der Fehlerursache erfolgt, d.h. von der Verschiebung der Objektivlinse aus der optischen Achse. Die genannte Spurführungsmethode kann somit auch für optische Aufzeichnungsträger mit hoher Aufzeichnungsdichte, d.h. kleiner Pit-Struktur verwendet werden, ohne den mittels Feinantrieb regelbaren Bereich einzuschränken. Ein direktes Auswerten des Ansteuerungssignals der Objektivlinse ist nicht sinnvoll, da dieses nicht unbedingt der tatsächlichen Auslenkung entspricht. Beispielsweise kann ein äußerer Einfluß wie eine Erschütterung, die Erdanziehung bei Schräglage des Geräts oder ähnliches dazu führen, daß die Objektivlinse ausgelenkt wird, ohne daß ein entsprechendes Ansteuersignal vorhanden ist. Dieser Nachteil wird ebenfalls durch die erfindungsgemäße Lösung behoben. Das erfindungsgemäße Gerät kann ein Gerät sein, welches ausschließlich zum Lesen oder ausschließlich zum Beschreiben optischer Aufzeichnungsträger geeignet ist. Aber auch ein Gerät, welches sowohl zum Lesen als auch zum Beschreiben optischer Aufzeichnungsträger geeignet ist, liegt im Rahmen der vorliegenden Erfindung. Anstatt einer Objektivlinse ist es ebenfalls vorteilhaft möglich, ein anderes optisches Element, welches eine entsprechende Funktion erfüllt, einzusetzen, beispielsweise ein holographisches optisches Element.

Erfindungsgemäß ist vorgesehen, daß das Erkennungsmittel aus einem feststehenden und aus einem mit der Linse gekoppelten Teil besteht. Dies hat den Vorteil, daß eine direkte Bestimmung der Bewegung der Objektivlinse sowie deren Größe möglich ist. Als Erkennungsmittel ist dabei beispielsweise ein Hall-Sensor oder ein kapazitiver Sensor vorgesehen, die jeweils einen feststehenden und einen mit der Linse gekoppelten Teil aufweisen. Auch ein an der Linse befestigter Spiegel mit zugeordneter Lichtquelle/Empfangseinheit, die die Bewegung eines reflektierten Strahls bestimmt oder jeder andere geeignete zwei- oder mehrteilige Sensor ist hier vorteilhaft einsetzbar.

Nach einer anderen Ausführungsform der vorliegenden Erfindung ist vorgesehen, daß das Erkennungsmittel ein die von den Detektorelementen abgegebenen Signale auswertendes Korrektursignal-Erzeugungsmittel ist. Dies hat den Vorteil, daß keine zusätzlichen im Bereich der Optik anzubringenden Bauteile benötigt werden. Im Bereich der Optik wird so kein zusätzlicher Bauraum benötigt, negative Beeinflussungen der Linse durch ein an diese gekoppeltes zusätzliches wenn auch leichtgewichtiges Teil des Erkennungsmittels ist ausgeschlossen. Weiterhin ist es als vorteilhaft anzusehen, daß die ohnehin vorhandenen Signale der Detektorelemente genutzt werden.

Das Korrektursignal-Erzeugungsmittel weist erfindungsgemäß ein Differenzbildungsmittel zur Bildung des Differenzsignals der von einem ersten und einem zweiten Detektorbereich abgegebenen Signale auf, wobei das Differenzsignal verstärkt und als Korrektursignal ausgegeben wird. Dies hat den Vorteil, daß nur wenige zusätzliche Funktionseinheiten im Vergleich zum bekannten Gerät erforderlich sind. Trotz der einfachen Realisierbarkeit ist dennoch eine verläßliche Korrektursignalbildung gewährleistet, da das Differenzsignal um so größer ist, je weiter der Spot, d.h. der Lichtstrahl von der optischen Achse abweicht. Der Verstärker arbeitet mit einem bestimmten Verstärkungsfaktor, der so angepaßt ist, daß der Wert des Korrektursignals in geeigneter Relation zum Wert des Spurführungsfehlersignals liegt.

Erfindungsgemäß ist weiterhin vorgesehen, den Verstärkungsfaktor, um den das Differenzsignal zur Bildung des Korrektursignals verstärkt wird, variabel zu gestalten. Dies hat den Vorteil, daß eine Anpassung auf die Reflektivität des optischen Aufzeichnungsträgers oder andere Gegebenheiten, die die auf den Detektor fallende Lichtintensität beeinflussen, möglich ist. Es wird somit eine noch exaktere Spurführung erzielt. Der Verstärker hat dabei beispielsweise einen Eingang, über den die variable Verstärkung gesteuert wird. An diesen Eingang kann ein im Gerät vorhandenes Plattentyperkennungsmittel angeschlossen sein, welches zur Erkennung der Art des optischen Aufzeichnungsträgers dient, und ein der Reflektivität der gerade vom Gerät auszulesenden oder zu beschreibenden optischen Aufzeichnungsträgers entsprechendes Signal abgeben kann. Der Verstärkungsfaktor ist entsprechend einstellbar. Der Verstärkungsfaktor kann aber auch durch ein anderes geeignetes Verfahren ermittelt werden.

Besonders geeignet ist es, die Reflektivität des optischen Aufzeichnungsträgers direkt zu bestimmen, und deren Kehrwert als variablen Anteil des Verstärkungsfaktors dem Verstärker zuzuführen. Dies hat den Vorteil, daß der größte störende Einfluß auf das Korrektursignal, nämlich die Abhängigkeit von der Reflektivität des optischen Aufzeichnungsträgers, auf diese Weise eliminiert wird. Das Korrektursignal wird somit auf die Reflektivität des optischen Aufzeichnungsträgers normiert, indem mit dem Kehrwert der Reflektivität multipliziert wird. Im einfachsten Fall wird dazu das Informationssignal oder HF-Signal verwendet, welches das Summensignal der Detektorelemente ist. Aus diesem Signal wird der Kehrwert gebildet, der dann dem Verstärker als Faktor zugeführt wird. Die Kombination von Kehrwertbildner und Verstärker wirkt somit als Normierungsverstärker. Da sowohl das HF-Signal als auch das Korrektursignal direkt aus den Signalen der Photodetektoren ermittelt werden, werden Schwankungen, die durch die Pit-Struktur des optischen Aufzeichnungsträgers hervorgerufen sind, direkt ausgeglichen. Falls bauteilebedingt keine optimale Korrelation, z.B. gleiche Phasenlage und gleicher Frequenzgang dieser Signale erzielbar ist, ist vorgesehen, zunächst den zeitlichen Mittelwert der Signale zu bilden und dann die Verstärkung mittels variablem Verstärkungsfaktor vorzunehmen. Dadurch werden kurzzeitige Schwankungen eliminiert. In einer anderen Variante der Erfindung kann statt des HF-Signals auch das Signal nur eines der Detektorbereiche oder eines Teils davon verwendet werden, welches dann zeitlich gemittelt wird. Ebenfalls im Rahmen der Erfindung liegend ist, daß sich der Verstärkungsfaktor aus einer Kombination mehrerer Anteile zusammensetzt, beispielsweise einer gewichteten Summe aus Normierung und einem weiteren variablen Anteil.

Der erste und der zweite Detektorbereich bestehen nach einer ersten Variante der Erfindung jeweils aus einem einzigen Detektorelement. Dies hat den Vorteil, daß insgesamt nur zwei Photodetektoren erforderlich sind, welches zu einer Miniaturisierung der Detektoranordnung und geringen Herstellungskosten führt.

Nach einer anderen Variante der Erfindung ist vorgesehen, den ersten und zweiten Detektorbereich aus jeweils zwei Detektorelementen aufzubauen, wobei dem Phasenvergleichsmittel die über Kreuz gebildeten Summensignale der vier Detektorelemente zugeführt werden. Dies hat den Vorteil einer besseren Auflösung. Die Beugungsmuster weisen bei Abweichung von der Spur im allgemeinen eine diagonale Verteilung bezüglich der viergeteilten Detektoranordnung auf, so daß ein Auswerten der über Kreuz, d.h. in Diagonalrichtung gebildeten Summensignale ein genaueres Spurführungssignal ermöglicht.

Man kann den Verstärkungsfaktor automatisch und unabhängig von der Ursache der störenden Einflüsse bestimmen. Dies hat den Vorteil, daß alle möglichen störenden Einflüsse kompensiert werden, ohne daß ihr Zusammenwirken und Auftreten im einzelnen vorbekannt sein müßte.

Die in den einzelnen Ansprüchen genannten Merkmale können sinnvollerweise auch in Kombination miteinander Anwendung finden. Weitere Vorteile des erfindungsgemäßen Gerätes können der nachfolgenden Beschreibung entnommen werden.

Dabei zeigen:
- Fig. 1: ein erfindungsgemäßes Gerät in schematischer Darstellung,
- Fig. 2: den Phasendetektor eines erfindungsgemäßen Gerätes,
- Fig. 3: die Phasenbeziehung der Detektorsignale eines erfindungsgemäßen Geräts zueinander und
- Fig. 4: eine Anordnung zum Abgleich des Verstärkungsfaktors eines erfindungsgemäßen Geräts.

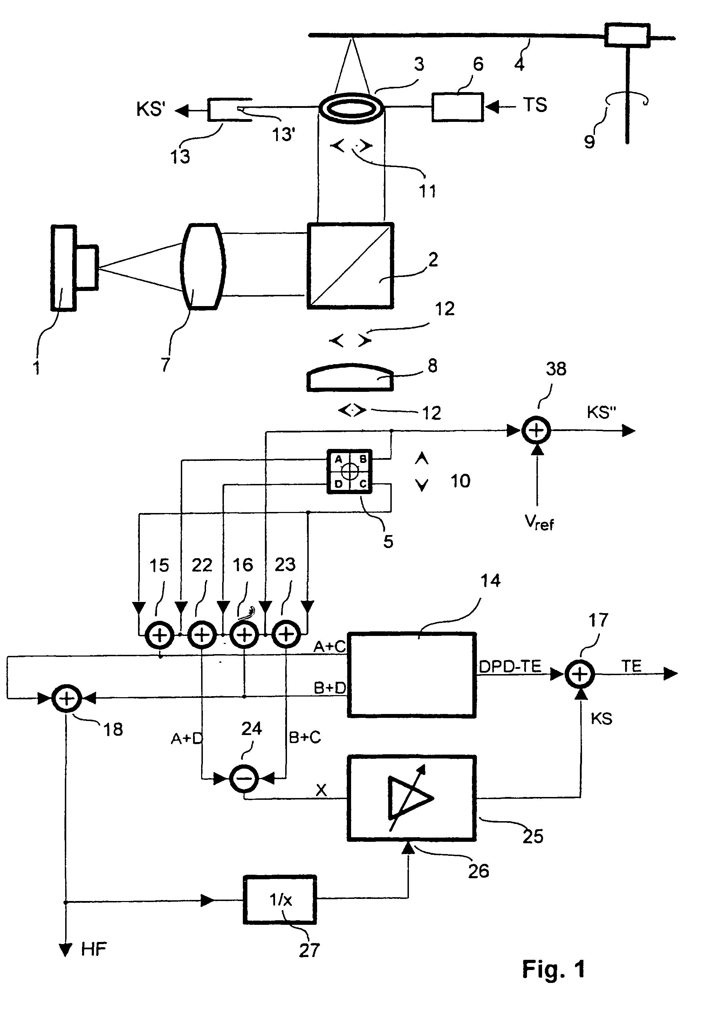

Fig. 1 zeigt ein erfindungsgemäßes Gerät in schematischer Darstellung. Eine Lichtquelle 1 erzeugt einen Lichtstrahl, der über einen halbdurchlässigen Spiegel 2, der im Ausführungsbeispiel als Teil eines polarisierenden Strahlteilers dargestellt ist, und eine Objektivlinse 3 auf einen optischen Aufzeichnungsträger 4 fokussiert wird. Von dort wird der Lichtstrahl reflektiert und auf eine Detektoranordnung 5 geleitet. Die Detektoranordnung 5 ist um 90° gekippt, d.h. in Draufsicht, abgebildet, und besteht aus vier Detektorelementen A, B, C und D. Pfeil 10 zeigt die Spurrichtung an, d.h. die Richtung, in der sich der Aufzeichnungsträger 4 relativ zur Detektoranordnung 5 bewegt. Die Detektoranordnung 5 kann somit in zwei seitlich zur Spurrichtung liegende Detektorbereiche eingeteilt werden, die aus den Detektorelementen A und D einerseits sowie B und C andererseits bestehen.

Zwischen Lichtquelle 1 und Spiegel 2 ist ein Kollimator 7 angeordnet, zwischen Spiegel 2 und der Detektoranordnung 5 eine Konvexlinse 8. Ein Feinantrieb 6 bewegt die Objektivlinse 3 in radialer Richtung bezüglich des optischen Aufzeichnungsträgers 4 entsprechend einem Feinantrieb-Stellsignal TS. Der Aufzeichnungsträger 4 ist im Ausführungsbeispiel als scheibenförmige Platte ausgelegt, beispielsweise entsprechend einer Audio-Compact Disc (CD), einer Video Disc, einem Aufzeichnungsträger hoher Aufzeichnungsdichte (DVD) oder ähnlichem. Der optische Aufzeichnungsträger 4 wird mittels eines hier nur schematisch angedeuteten Plattenantriebs 9 in Rotation versetzt. Dargestellt ist ein Schnitt durch den Aufzeichnungsträger 4 entlang eines Durchmessers. Der von der Objektivlinse 3 auf den Aufzeichnungsträger 4 fokussierte Lichtstrahl befindet sich im radial äußeren Bereich des Aufzeichnungsträgers 4. Die Verschiebungsrichtung des vom optischen Aufzeichnungsträger 4 reflektierten Strahls nach Durchgang der Objektivlinse 3 welche durch die vom Feinantrieb 6 bewirkte Verschiebung der Objektivlinse 3 hervorgerufen wird, ist durch die Pfeile 12 angedeutet. Pfeil 11 stellt die Bewegungsrichtung der Linse 3 dar.

Nach einer ersten Ausführungsform der Erfindung ist an der Objektivlinse 3 ein Teil 13' eines Linsenbewegungserkennungsmittels gekoppelt, welches mit einem feststehenden Teil 13 zusammenwirkt. Der feststehende Teil 13 des Erkennungsmittels gibt ein Korrektursignal KS' ab. Eine nähere Beschreibung der nur schematisch abgebildeten Teile 13 und 13' erfolgt nicht, da es sich hierbei um jeden beliebigen geeigneten, dem Fachmann geläufigen Positions- bzw. Bewegungssensor handeln kann.

Die Ausgänge der Detektorelemente A und C sind mit einem Summierer 15 verbunden, die Ausgänge der Detektorelemente B und D mit einem Summierer 16. Die entsprechenden Summensignale A+C bzw. B+D werden einem Phasendetektor 14 zugeleitet, an dessen Ausgang ein nach der DPD-Methode ermitteltes Spurfehlersignal DPD-TE anliegt. Der Ausgang des Phasendetektors 14 ist mit einem weiteren Summierer 17 verbunden, an dessen anderem Eingang ein Korrektursignal KS, KS' bzw. KS" anliegt und dessen Ausgangssignal das korrigierte Spurfehlersignal TE ist. Das Korrektursignal KS' entspricht dabei dem nach der bereits beschriebenen ersten Ausführungsform ermittelten Korrektursignals während das Korrektursignal KS bzw. KS" mittels weiter unten beschriebenen zweiten und dritten Ausführungsformen des Ausführungsbeispiels bestimmt wird.

Die Ausgänge der Summierer 15 und 16 sind mit den Eingängen eines weiteren Summierers 18 verbunden. Am Ausgang des Summierers 18 liegt somit die Summe der Signale aller Detektorelemente A, B, C und D an. Dieses Signal ist das Informationssignal HF, welches zum Umwandeln in für den Nutzer auswertbare Signale an eine hier nicht dargestellte Auswerteeinheit weitergegeben wird.

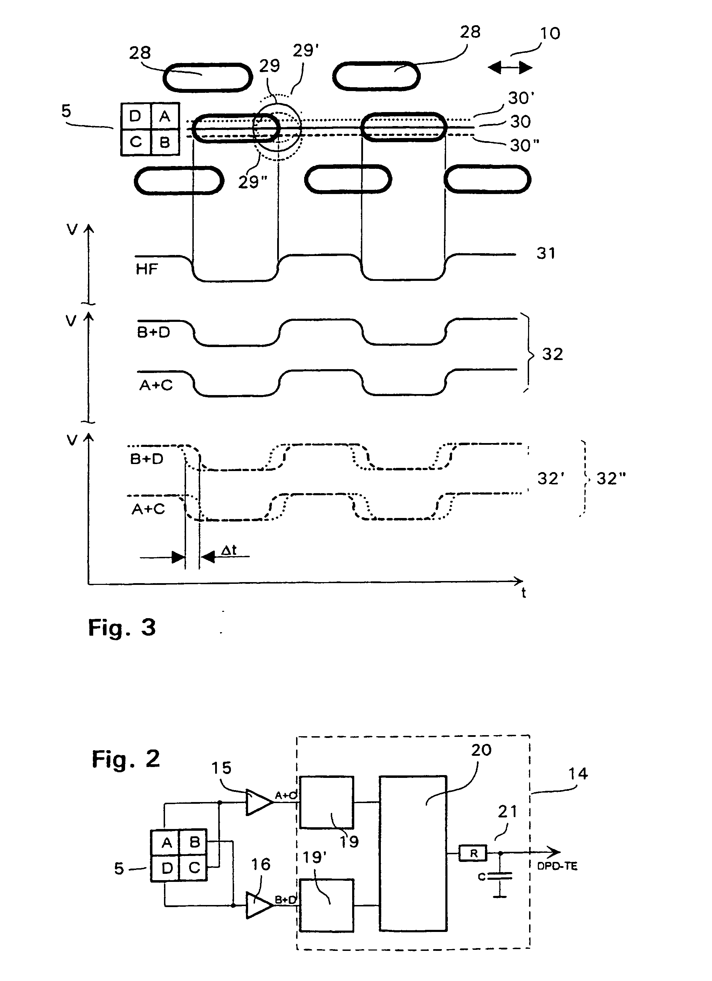

Der Aufbau und die Funktion des Phasendetektors 14 sind weiter unten zu Fig. 2 und 3 beschrieben.

Nach einem zweiten Ausführungsbeispiel ist vorgesehen, die Verschiebung der Objektivlinse 3 aus den Signalen der Detektoranordnung 5 zu ermitteln. Dazu sind die Detektorelemente A und D mit dem Eingang eines Summierers 22 verbunden, die Ausgänge der Detektorelemente B und C sind mit dem Eingang eines Summierers 23 verbunden. An den Ausgängen der Summierer 22 bzw. 23 liegen die Summensignale A+D bzw. B+C an, die den seitlich der Spurrichtung befindlichen Detektorbereichen bestehend aus Detektorelement A und D bzw. Detektorelement B und C entsprechen. Die Ausgänge der Summierer 22 und 23 sind mit einem Differenzbildner 24 verbunden, an dessen Ausgang ein Differenzsignal X anliegt. Der Ausgang des Differenzbildners 24 ist mit einem Verstärker 25 verbunden, dessen Verstärkungsfaktor K variabel ist. Am Ausgang des Verstärkers 25 liegt das Korrektursignal KS an. Ein Steuereingang 26 des Verstärkers 25 dient dazu, den Verstärkungsfaktor K gesteuert zu variieren. Im vorliegenden Ausführungsbeispiel ist der Steuereingang 26 mit dem Ausgang eines Kehrwertbildners 27 verbunden, an dessen Eingang das Informationssignal HF anliegt. Der Kehrwertbildner 27 kann gleichzeitig auch verstärkende oder filternede Funktion haben. Der Verstärkungsfaktor K des Verstärkers 25 entspricht also K = 1/HF, dem Kehrwert des Informationssignals HF, falls der Kehrwertbildner 27 Verstärkungsfaktor 1 aufweist, d.h. nicht verstärkend wirkt.

In einer alternativen Ausgestaltungsform der Erfindung besteht die Detektoranordnung 5 nur aus zwei Detektorelementen A und B. Die Summierer 15, 16, 22 und 23 sind dabei nicht erforderlich, die Ausgangssignale der Detektorelemente A und B werden direkt den Eingängen des Phasendetektors 14 bzw. des Differenzbildners 24 zugeführt. Der Aufbau dieser alternativen Ausgestaltungsform ist somit einfacher, erreicht aber im Vergleich zur Verwendung von vier Detektorelementen nicht vollständig deren Genauigkeit.

Nach einer dritten Ausführungsform der Erfindung ist eines der Detektorelemente, in Fig. 1 Detektorelement B, mit einem Summierer 38 verbunden, an dessen anderem Eingang ein Referenzsignal V_{ref} anliegt, und an dessen Ausgang ein Korrektursignal KS" anliegt. Das Referenzsignal wird so eingestellt, daß das Korrektursignal KS" zu Null wird, wenn das Detektorelement B von dem bezüglich der durch Pfeil 10 angedeuteten Spurrichtung auf der Detektoranordnung 5 zentrierten Spot beleuchtet wird. Diese Einstellung kann beispielsweise bei der Herstellung erfolgen. Jede Abweichung des Spots von der zentrierten Position resultiert dann in einem positiven oder negativen Korrektursignal KS".

Zur Beschreibung der Funktion des erfindungsgemäßen Geräts sei zunächst auf Fig. 2 hingewiesen. Hier ist der Aufbau des Phasendetektors 14 schematisch erläutert. Die Eingänge des Phasendetektors 14 sind mit jeweils einem Wandler 19 bzw. 19' verbunden, deren Ausgänge mit den Eingängen eines Phasenvergleichers 20 verbunden sind. Der Ausgang des Phasenvergleichers 20 ist über ein Tiefpaßfilter 21, hier schematisch aus Widerstand R und Kapazität C dargestellt, mit dem Ausgang des Phasendetektors 14 verbunden, an dem das mittels der DPD-Methode ermittelte Spurfehlersignal DPD-TE anliegt. Der erste Eingang des Phasendetektors 14 ist mit dem Ausgang des Summierers 15 verbunden, an dessen Eingängen die Ausgangssignale der Detektorelemente A und C anliegen. Der zweite Eingang des Phasendetektors 14 ist mit dem Ausgang des Summierers 16 verbunden, dessen Eingänge mit den Detektorelementen B und D verbunden sind.

Die Signale der Detektorelemente A und C werden im Summierer 15 addiert, das Summensignal wird im Wandler 19, der als Nulldurchgangskomparator wirkt, auf Logik-Level gebracht. Ein entsprechendes digitalisiertes Summensignal B+D wird mittels des Summierers 16 und des Wandlers 19' gebildet. Diese beiden Signale werden dem Phasenvergleicher 20 zugeführt, der den zeitlichen Abstand der beiden Signale zueinander auswertet. Das Spurfehlersignal DPD-TE ist der Mittelwert dieser Zeitdifferenzen und wird durch den Tiefpaßfilter 21 gebildet. Wenn der Abtastpunkt oder Spot 29, wie im nachfolgenden zu Fig. 3 erläutert, genau der Spurmitte 30 folgt, dann erfolgen die Nulldurchgänge der Summensignale A+C und B+D gleichzeitig, der sich ergebende Spurfehler ist Null. Wenn der Spot 29 der Spur mit einer konstanten Abweichung zur Spurmitte folgt, so tritt der Nulldurchgang dieser Summensignale nicht mehr gleichzeitig, sondern zeitlich zueinander verschoben auf. Die auftretende Zeitdifferenz ist im Mittel näherungsweise proportional zur Abweichung der Abtastung zur Spurmitte, wobei die Zeitdifferenz bezogen auf eines der Signale positiv oder negativ sein kann. Das Vorzeichen der Zeitdifferenz beinhaltet also die Richtung, der Betrag dagegen die Größe der Abweichung.

Fig. 3 zeigt in ihrem oberen Teil einen schematischen, stark vergrößerten Ausschnitt der Informationsschicht des optischer Aufzeichnungsträgers 4 in Draufsicht. Man erkennt drei nebeneinanderliegende Spuren, von denen zwei bzw. drei der sie bildenden, in Spurrichtung länglich ausgedehnten Vertiefungen, der sogenannten Pits 28, dargestellt sind. Sowohl die Abstände der Pits 28 in Spurrichtung als auch deren Länge in Spurrichtung (Pfeil 10) können in bestimmten Grenzen von den hier abgebildeten Gegebenheiten abweichen. Dies hängt vom verwendeten Modulationsverfahren zur Umsetzung der zu speichernden Information in das Pit-Muster und von dem Inhalt der aufgezeichneten Informationen ab. Insbesondere können die Pits 28 unterschiedliche Länge aufweisen.

Links von den Pits 28 ist eine symmetrisch zur Spurmitte 30 der mittleren Spur befindliche Detektoranordnung 5 mit den Detektorelementen A, B, C und D angedeutet. Dies dient dazu, zu verdeutlichen, wie sich die Ausgangssignale der Detektorbereiche A, B, C und D bei Verschiebung des auf die Informationsschicht fallenden Lichtflecks, des Spot 29, aus der Spurmitte 30 heraus verhalten.

Im unteren Bereich der Fig. 3 sind die Amplituden mehrerer Kombinationen der Ausgangssignale der Detektorbereiche A, B, C und D über der Zeitachse t aufgetragen, wobei die Zeitachse t bei einer Bewegung von Spot 29 und optischem Aufzeichnungsträger in Spurrichtung (Pfeil 10) relativ zueinander mit normaler Auslesegeschwindigkeit, der Raumachse in Spurrichtung entspricht.

Die direkt unterhalb der Pits 28 abgebildete Kurve 31 zeigt das Informationssignal HF, d.h. die Summe der Signale aller Detektorelemente A, B, C und D. Solange der Spot 29 keines der Pits 28 trifft, ist die Amplitude des Informationssignals HF groß. Sobald sich der Spot 29 auf eines der Pits 28 bewegt nimmt die Amplitude in Folge von destruktiver Interferenz ab und erreicht ein Minimum sobald eine größtmögliche Überdeckung von Spot 29 und Pit 28 erreicht ist.

Die Kurven 32 zeigen eine Kombination der Signale A+C und B+D ohne Trackfehler, d.h. wenn der Spot 29 zur Spurmitte 30 zentriert ist, bzw. wenn keine Auslenkung der Objektivlinse 3 vorliegt. Die Kurven 32' (punktiert) bzw. die Kurven 32" (gestrichelt) zeigen die zeitliche Verschiebung der Summensignale A+C und B+D in Abhängigkeit von der Linsenverschiebung oder der Abweichung des Spots 29' bzw des Spots 29" von der Spurmitte 30 in Richtung der verschobenen Abtastspur 30' bzw. 30". Da sowohl eine Abweichung von der Spurmitte als auch eine Linsenverschiebung zum gleichen Ergebnis führen, lassen sich beide Abhängigkeiten nicht trennen. Die zeitliche Verschiebung Δt der Signale A+C und B+D zueinander entspricht in ihrem Betrag der Größe der Abweichung der verschobenen Abtastspur 30', 30" von der Spurmitte 30 und in ihrem Vorzeichen der Richtung der entsprechenden Abweichung. Der Phasendetektor 14 bestimmt daraus - wie oben beschrieben - das Spurfehlersignal DPD-TE.

Es sei angemerkt, daß abhängig vom optischen Aufbau die Signale der Detektorbereiche A, B, C und D zueinander schon ohne Spurabweichung oder Linsenauslenkung zeitlich statische Verschiebungen aufweisen können. Die in den Kurven 32' und 32" gezeigten Verschiebungen von B+D im Vergleich zu A+C sind aber typisch bei Linsenauslenkung oder Abweichung von der Spurmitte.

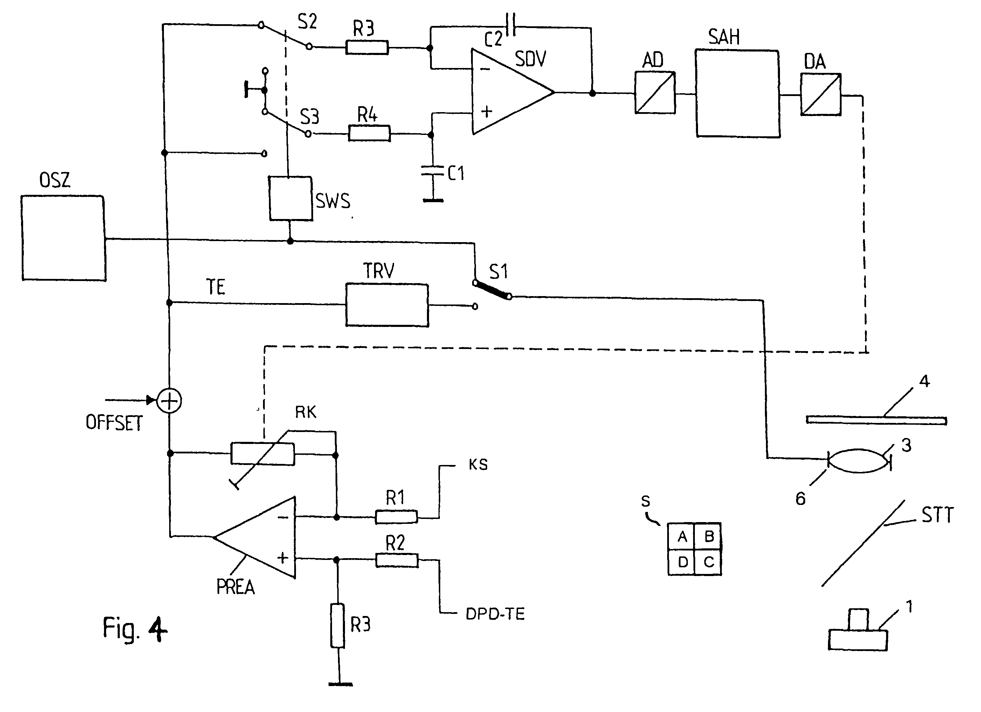

Fig. 4 zeigt eine Anordnung zum Abgleich des Verstärkungsfaktors K eines erfindungsgemäßen Geräts. Das bei Auslenkung aus der Spurmitte detektierte Spurfehlersignal DPD-TE wird zur Einstellung des Verstärkungsfaktors K entsprechend Fig.4 einem K-Faktor Steller RK zugeführt, der vorzugsweise von einem Verstärker PREA gebildet wird, der in mindestens einem Rückkopplungszweig zum Einstellen des Verstärkungsfaktors K vorzugsweise einen in seinem Wert elektrisch veränderbaren Widerstand aufweist. Am Ausgang des K-Faktor-Stellers RK bzw. des Verstärkers PREA steht dann vor oder nach einer Offsetkorrektur OFFSET ein kompensiertes Spurfehlersignal TE zur Verfügung, das bei geöffnetem Spurregelkreis den Ausgangspunkt der Verfahren zur automatisierten Einstellung des Verstärkungsfaktors K bildet.

Das in Fig.4 angegebene Prinzipschaltbid zur Durchführung eines überwiegend integrativen Verfahrens zur automatischen K-Faktor-Einstellung zeigt einen optischen Aufzeichnungsträger 4, der mit dem Abtaststrahl einer Lichtquelle 1 abgetastet wird, wobei das Licht der Lichtquelle 1 einen Strahlteiler STT und eine Objektivlinse 3 zur Fokussierung des Abtaststrahls auf dem optischen Aufzeichnungsträger 4 und zum Detektieren mit einer Detektoranordnung 5, der vier Detektorelemente A,B,C,D enthält, passiert. Das Spurfehlersignal DPD-TE und das Kompensationssignal KS sind über jeweils einen Widerstand R1, R2 mit einem Eingang eines Verstärkers PREA verbunden. Der nichtinvertierende Eingang des Verstärkers PREA ist über einen dritten Widerstand R3 nach Masse geführt und der invertierende Eingang ist über einen vorzugsweise mit einem elektrischen Signal einstellbaren Widerstand mit dem Ausgang des Verstärkers PREA verbunden. Der derart beschaltete Verstärker PREA bildet den eigentlichen K-Faktor Steller RK und an seinem Ausgang ist ein Addierer OFFSET zur bekannten Korrektur eines Offsets im Regelkreis vorgesehen, so daß nach dem Addierer OFFSET ein kompensiertes Spurfehlersignal TE zur Verfügung steht, das hinsichtlich des Verstärkungsfaktors K optimal einzustellen ist, um als Regelgröße für einen angeschlossenen Spurregelverstärker TRV verwendet werden zu können. Zur Einstellung des Verstärkungsfaktors K wird zunächst der Spurregelkreisverstärker TRV von dem Feinantrieb 6, der zur Auslenkung der Objektivlinse 3 vorgesehen ist, mit einem Schalter S1 abgetrennt und der Feinantrieb 6 mit einem Oszillator OSZ verbunden. Das Umschaltsignal wird dabei von einem im Gerät vorhandenen Mikroprozessor bereitgestellt, der nicht dargestellt ist. Der Oszillator OSZ stellt zum Auslenken des Aktuators bzw. der Objektivlinse 3 vorzugsweise ein sinusförmiges Steuersignal bereit. Mit dem Steuersignal werden der Feinantrieb 6 bzw. die Objektivlinse 3 um einen gewissen Weg ausgelenkt und am Oszillator OSZ ist Fig.4 entsprechend ein Schwellwertschalter SWS angeschlossen, mit dem zur Ansteuerung zweier Umschalter S2, S3 ein Rechtecksignal SWS gebildet wird. Mit den Umschaltern S2, S3 wird wechselweise an den Eingängen eines Differenzverstärkers über einen Widerstand R3 bzw. einen Widerstand R4 das kompensierte Spurfehlersignal TE oder Massepotential angelegt und der nichtinvertierende Eingang des Differenzverstärkers ist über einen ersten Kondensator C1 mit einem Masseanschluß verbunden, während sein nichtinvertierender Eingang über einen zweiten Kondensator C2 mit dem Ausgang des Differenzverstärkers verbunden ist. Die Umschalter S2, S3 bilden mit dem beschalteten Differenzverstärker einen sogenannten Synchrondetektor SDV, mit dem ein Synchrondetektorausgangssignal eines Spurfehlersignals TE entsprechend der Ausgangsstellung des K-Faktor-Stellers RK gebildet wird. Da am Eingang des Synchrondetektors SDV im Zusammenhang mit der Umschaltung durch das um den o.g. Weg auslenkende Signal des Oszillators OSZ die Richtung bestimmt ist, in der der K-Faktor Steller RK zur optimalen Einstellung zu steuern ist, können unmittelbar Abweichungen des kompensierten Spurfehlersignals TE von einem optimalen Verlauf als Einstellkriterium verwendet werden. Der Synchrondetektor SDV ist vorzugsweise ein Differenzsynchronintegrator bzw. Synchrondemodulator, mit dem infolge der Kenntnis der Auslenkrichtung der Objektivlinse 3in vorteilhafter Weise unmittelbar die Richtung bestimmt wird, d.h. abnehmend oder zunehmend, in die der Verstärkungsfaktor K zur optimalen Einstellung zu beeinflussen ist. Eine Iteration ist nicht erforderlich. Da die Frequenz, mit der die Objektivlinse 3 ausgelenkt wird, aufgrund der Ansteuerung durch den Oszillator OSZ bekannt ist, ist die Richtung, in die der K-Faktor-Steller RK zu steuern ist, unmittelbar bestimmt, denn es ist davon auszugehen, daß der Verstärkungsfaktor K bzw. die Verstärkung des Verstärkers PREA zu groß ist, wenn sich das Oszillatorsignal und das Synchrondemodulatorsignal in Phase befinden und andererseits der Verstärkungsfaktor K bzw. die Verstärkung des Verstärkers PREA zu gering ist, wenn sich Oszillatorsignal und Synchrondemodulatorsignal in Gegenphase befinden. Die Oszillatorfrequenz ist vorzugsweise eine Frequenz unterhalb der mechanischen Eigen-Resonanzfrequenz des Feinantriebs 6.

Am Eingang des Synchrondetektors SDV ist ein der Abweichung entsprechendes Synchrondetektoreingangssignal wirksam und zum automatisierten Einstellen des Verstärkungsfaktors K ist am Ausgang des Synchrondetektors SDV vorzugsweise über einen Analog-Digital-Wandler AD eine Sample-and-Hold-Schaltung SAH zum Ansteuern des K-Faktor-Stellers RK angeschossen. Mit der Sample-and-Hold-Schaltung SAH werden in bekannter Weise jeweils die aktuellen Werte zum Stellen des K-Faktor-Stellers RK übernommen und schließlich der optimale Einstellwert beibehalten. Diese Steuerung sowie die Umschaltung in den Regelbetrieb werden vorzugsweise mit dem bereits erwähnten Mikroprozessor durchgeführt. Um eine hohe Langzeitkonstanz des automatisiert ermittelten Einstellwertes für den optimalen K-Faktor-Abgleich zu gewährleisten, ist eine digitale Sample-and-Hold-Schaltung SAH vorgesehen, obwohl grundsätzlich auch eine analog arbeitende Sample-and-Hold-Schaltung SAH verwendet werden kann. Weiterhin wurde das Ausführungsbeispiel anhand eines im wesentlichen integrale Signalanteile bereitstellenden Synchrondetektors SDV beschrieben, obwohl die Verwendung eines auch proportionale Signalanteile bereitstellenden Synchrondetektors SDV insbesondere im Zusammenhang mit dem Abgleichverhalten bei geringen Abweichungen von der optimalen Einstellung zu bevorzugen ist. Die Vorteile der Verwendung eines sowohl integrale als auch proportionale Anteile enthaltenden Signals bestehen darin, daß die Gefahr, daß ein angeschlossener Integrator bis in die Begrenzung fährt, gemindert und mit einem festgelegten Restfehler gearbeitet wird. Durch den Proportionalanteil wird weiterhin der Betriebszustand, bei dem kein Eingangssignal zur Verfügung steht, vorteilhaft beeinflußt.

Der Verstärkungsfaktor K beeinflußt, wie im Ausführungsbeispiel beschrieben, eine Steigung des Spurfehlersignals TE, welche in Abhängigkeit von der Auslenkung der Objektivlinse 3 auftritt. Die Steigung des Spurfehlersignals TE ist dadurch bedingt, daß sich das Spurfehlersignal TE aus zwei Anteilen zusammensetzt, wobei ein erster Anteil von der Lage bzw. Stellung der Objektivlinse 3 zur Spurmitte 30 bestimmt wird. Dieser Anteil entspricht dem eigentlichen Spurfehlersignal. Der andere Anteil ist der die Steigung des Spurfehlersignals betreffende Anteil. Dieser Anteil, der einen mit dem Verstärkungsfaktor K zu korrigierenden Anteil darstellt, resultiert aus der Auslenkung der Objektivlinse 3 aus ihrer Neutrallage. Der entstehende Fehleranteil wird mittels der Erfindung wie oben beschrieben korrigiert. Der mittels des Verstärkungsfaktors K zu korrigierende Fehleranteil kann weder mittels einer Offset- noch mittels einer Verstärkungseinstellung im Regelkreis beeinflußt werden. Zur Einstellung des Verstärkungsfaktors K wird der Regelkreis geöffnet und die Objektivlinse 3 ausgelenkt, während demgegenüber Offset oder die Verstärkung im Regelkreis bei geschlossenem Regelkreis eingestellt werden können, wobei eine spezielle Ansteuerung des Feinantriebs 6 zur Auslenkung der Objektivlinse 3 aus ihrer Neutrallage nicht erforderlich ist, da diese mit dem Regelsignal erfolgt.

## Patentansprüche

1. Gerät zum Lesen oder Beschreiben optischer Aufzeichnungsträger (4) mittels eines Lichtstrahls, welches eine Objektivlinse (3) zum Fokussieren des Lichtstrahls auf dem Aufzeichnungsträger (4), eine Detektoranordnung (5) zum Umwandeln des vom Aufzeichnungsträger (4) reflektierten Lichts in elektrische Signale, wobei die Detektoranordnung in bezüglich der Richtung einer Spur des optischen Aufzeichnungsträgers (4) seitlich angeordnete Detektorelemente (A, B, C, D) aufgeteilt ist, ein Phasenvergleichsmittel (14), das die Phasenlage der von den Detektorelementen (A, B, C, D) abgegebenen Signale auswertet und ein der Phasenverschiebung proportionales Signal (DPD-TE) abgibt, ein Spurnachführungsmittel zum Nachführen der Spur in Abhängigkeit von dem vom Phasenvergleichsmittel (14) abgegebenen Signal, sowie ein Erkennungsmittel zum Erkennen einer momentanen Verschiebung der Objektivlinse aus der optischen Achse aufweist, **dadurch gekennzeichnet, daß** das Erkennungsmittel ein momentanes Korrektursignal (KS, KS', KS") abgibt, und daß das der Phasenverschiebung proportionale Signal (DPD-TE) und das momentane Korrektursignal (KS,KS',KS") einer Einrichtung (17) zum Bilden eines momentan korrigierten Spurfehlersignals (TE) zugeführt werden.

2. Gerät nach Anspruch 1, **dadurch gekennzeichnet, daß** das Erkennungsmittel aus einem feststehenden Teil (13) und einem mit der Objektivlinse (3) gekoppelten Teil (13') besteht.

3. Gerät nach Anspruch 1, **dadurch gekennzeichnet, daß** das Erkennungsmittel ein die von den Detektorelementen (A, B, C, D) abgegebenen Signale auswertendes Korrektursignalerzeugungsmittel ist.

4. Gerät nach Anspruch 3, **dadurch gekennzeichnet, daß** das Korrektursignalerzeugungsmittel ein Differenzbildungsmittel (24) aufweist, an dessen Eingängen die Signale eines ersten und eines zweiten Detektorbereichs (A, D bzw. B, C) anliegen und dessen Ausgang mit einem Verstärker (25) verbunden ist, welcher das momentane Korrektursignal (KS) abgibt.

5. Gerät nach Anspruch 4, **dadurch gekennzeichnet, daß** der Verstärkungsfaktor (K) des Verstärkers (25) variabel ist.

6. Gerät nach Anspruch 5, **dadurch gekennzeichnet, daß** ein Reflektivitätsbestimmungsmittel (18) vorgesehen ist, aus dessen Ausgangssignal der Kehrwert gebildet und als variabler Anteil des Verstärkungsfaktors (K) dem Verstärker (25) zugeführt wird.

7. Gerät nach einem der Ansprüche 4 - 6, **dadurch gekennzeichnet, daß** der erste und der zweite Detektorbereich (A, D bzw. B, C) aus jeweils einem einzigen Detektorelement (A oder D bzw. B oder C) gebildet sind.

8. Gerät nach einem der vorhergehenden Ansprüche, **dadurch gekennzeichnet, daß** der erste und der zweite Detektorbereich (A, D bzw. B, C) jeweils aus einem ersten und einem zweiten Detektorelement (A und D bzw. B und C) gebildet sind, und daß dem Phasenvergleichsmittel (14) das Summensignal aus erstem Detektorelement (A) des ersten Detektorbereichs (A, D) und zweitem Detektorelement (C) des zweiten Detektorbereichs (B, C) sowie das Summensignal aus zweitem Detektorelement (D) des ersten Detektorbereichs (A, D) und erstem Detektorelement (B) des zweiten Detektorbereichs (B, C) zugeführt wird.

9. Gerät nach einem der Ansprüche 5 - 8, **dadurch gekennzeichnet, daß** ein Feinantrieb (6) mit einer Steuereinrichtung (S1) zur Auslenkung der Objektivlinse (3) aus ihrer Neutrallage verbunden ist, eine das der Phasenverschiebung proportionale Signal (DPD-TE) während der Auslenkung bewertende Auswerteeinheit (SDV) vorgesehen ist und an der Auswerteeinheit (SDV) eine Stelleinrichtung (SAH) zum automatisierten Einstellen eines K-Faktor-Stellers (RK) auf einen optimalen Verstärkungsfaktor (K) angeschlossen ist.

## Claims

1. Device for reading from or writing to optical recording media (4) by means of a light beam, which device has an objective lens (3) for focusing the light beam on the recording medium (4), a detector arrangement (5) for converting the light reflected from the recording medium (4) into electrical signals, the detector arrangement being divided into detector elements (A, B, C, D) which are arranged laterally with regard to the direction of a track of the optical recording medium (4), a phase comparison means (14) which evaluates the phase angle of the signals emitted by the detector elements (A, B, C, D) and emits a signal (DPD-TE) which is proportional to the phase shift, a tracking means for tracking the track in dependence on the signal emitted by the phase comparison means (14), and an identification means for identifying a momentary displacement of the objective lens from the optical axis,
**characterized in that** the identification means emits a momentary correction signal (KS, KS', KS''), and **in that** the signal (DPD-TE) which is proportional to the phase shift and the momentary correction signal (KS, KS', KS'') are fed to a means (17) for generating a momentarily corrected track error signal (TE).

2. Device according to Claim 1, **characterized in that** the identification means consists of a stationary part (13) and a part (13') which is coupled to the objective lens (3).

3. Device according to Claim 1, **characterized in that** the identification means is a correction signal generation means evaluating the signals emitted by the detector elements (A, B, C, D).

4. Device according to Claim 3, **characterized in that** the correction signal generation means has a difference formation means (24) at whose inputs the signals of a first and of a second detector area (A, D and B, C, respectively) are present and whose output is connected to an amplifier (25), which emits the momentary correction signal (KS).

5. Device according to Claim 4, **characterized in that** the gain factor (K) of the amplifier (25) is variable.

6. Device according to Claim 5, **characterized in that** a reflectivity determination means (18) is provided, from whose output signal the reciprocal is formed and is fed to the amplifier (25) as the variable component of the gain factor (K).

7. Device according to one of Claims 4 - 6, **characterized in that** the first and the second detector area (A, D and B, C, respectively) are formed from a single detector element (A or D and B or C, respectively) in each case.

8. Device according to one of the preceding claims, **characterized in that** the first and the second detector area (A, D and B, C, respectively) are each formed from a first and a second detector element (A and D and B and C, respectively), and **in that** the summation signal from the first detector element (A) of the first detector area (A, D) and the second detector element (C) of the second detector area (B, C) as well as the summation signal from the second detector element (D) of the first detector area (A, D) and the first detector element (B) of the second detector area (B, C) are fed to the phase comparison means (14).

9. Device according to one of Claims 5 - 8, **characterized in that** a vernier drive (6) is connected to a control device (S1) for deflecting the objective lens (3) from its neutral position, an evaluation unit (SDV) which evaluates the signal (DPD-TE) which is proportional to the phase shift during the deflection is provided and an actuating device (SAH) for automated setting of a K factor controller (RK) to an optimal gain factor (K) is connected to the evaluation unit (SDV).

## Revendications

1. Appareil à lecture ou à enregistrement d'un support d'enregistrement optique (4) à l'aide d'un faisceau lumineux, lequel comprend une lentille d'objectif (3) permettant la focalisation du faisceau lumineux sur le support d'enregistrement optique (4), un dispositif de détection (5) permettant la conversion du faisceau réfléchi par le support d'enregistrement optique (4) en signaux électriques, lors de laquelle le dispositif de détection (5) étant divisé en segments détecteurs (A, B, C, D) disposés les uns à côté des autres en fonction de la direction d'une piste du support d'enregistrement optique (4), un moyen de comparaison de phase (14) qui analyse la position de phase des signaux émis par les segments détecteurs (A, B, C, D) ainsi qu'un signal (DPD-TE) proportionnel au déplacement de la phase, un moyen de suivi de piste permettant le suivi de la piste en fonction du signal émis par le moyen de comparaison de phase (14) ainsi qu'un moyen de reconnaissance permettant la reconnaissance d'un déplacement actuel de la lentille d'objectif hors de l'axe optique, **caractérisé en ce que** le moyen de reconnaissance émet un signal de correction (KS, KS', KS") actuel et que le signal (DPD-TE) proportionnel au déplacement de la phase et le signal de correction (KS, KS', KS") actuel soient transmis à un dispositif (17) permettant la génération d'un signal d'erreur de suivi de piste (TE) corrigé actuel.

2. Appareil selon la revendication 1, **caractérisé en ce que** le moyen de reconnaissance comprend une partie fixe (13) et une partie couplée (13') à la lentille d'objectif (3).

3. Appareil selon la revendication 1, **caractérisé en ce que** le moyen de reconnaissance est un moyen de génération de signaux de correction qui analyse les signaux émis par les segments détecteurs (A, B, C, D).

4. Appareil selon la revendication 3, **caractérisé en ce que** que le moyen de génération de signaux de correction comprend un moyen de génération de différence (24), aux entrées duquel les signaux d'une première et d'une seconde zone de détection (A, D ou B, C) sont présents et dont la sortie est reliée à un amplificateur (25), lequel émet un signal de correction (KS) actuel

5. Appareil selon la revendication 4, **caractérisé en ce que** le facteur d'amplification (K) de l'amplificateur (25) est variable.

6. Appareil selon la revendication 5, **caractérisé en ce qu'**un moyen de détermination de la réflectivité (18) est prévu, que la valeur inverse est générée à partir de son signal de sortie qui est transmis comme partie variable du facteur d'amplification (K) à l'amplificateur (25).

7. Appareil selon les revendications 4-6, **caractérisé en ce que** la première et la seconde zone de détection (A, D ou B,C) sont chacune composées d'un seul segment détecteur (A ou D, ou B ou C)

8. Appareil selon les revendications précédentes, **caractérisé en ce que** la première et la seconde zone de détection (A, D ou B, C) sont chacune composées d'un premier et d'un second segment détecteur (A et D, ou B et C) et que le signal somme du premier segment détecteur (A) de la première zone de détection (A, D) et du second segment détecteur (C) de la seconde zone de détection (B, C) ainsi que le signal somme du second segment détecteur (D) de la première zone de détection (A, D) et du premier segment détecteur (B) de la seconde zone de détection (B, C) sont transmis au moyen de comparaison de phases (14).

9. Appareil selon les revendications 5-8, **caractérisé en ce qu'**une commande fine (6) est reliée à un dispositif de commande (S1) permettant de dévier la lentille d'objectif (3) de sa position neutre, qu'une unité d'analyse (SDV) qui évalue le signal (DPD-TE) proportionnel au déplacement de la phase lors de la déviation est prévue et qu'un dispositif de positionnement (SAH) pour la réglage automatique d'un dispositif de positionnement K (RK) sur un facteur d'amplification (K) est relié à l'unité d'analyse (SDV).
